# EUROPÄISCHE PATENTSCHRIFT

(11) **EP 2 543 527 B1**
(45) Veröffentlichungstag und Bekanntmachung des Hinweises auf die Patenterteilung: **10.05.2017**
(21) Anmeldenummer: 12174993.1
(22) Anmeldetag: 04.07.2012
(51) Int. Cl.: B60G 7/00, F16B 5/07, B60G 7/02, B60G 9/00

(54) **Fahrzeugachslenker sowie Verschlussstopfen zur Verwendung in einem Fahrzeugachslenker**
Vehicle axle steerer and stopper for use in a vehicle axle steerer
Guide d'essieu de véhicule et bouchon de fermeture pour l'utilisation dans un guide d'essieu de véhicule

(30) Priorität: 06.07.2011 DE 102011107347
(43) Veröffentlichungstag der Anmeldung: 09.01.2013
(73) Patentinhaber: BPW Bergische Achsen KG, 51674 Wiehl (DE)
(72) Erfinder: Gmeiner, Swen, 51709 Marienheide (DE)
(74) Vertreter: Bungartz Christophersen Partnerschaft mbB Patentanwälte

(56) Entgegenhaltungen:
- EP-A2- 0 810 379
- DE-A1-102006 015 671
- DE-A1-102008 061 190
- FR-A5- 2 127 940
- US-A1- 2008 029 988

## Beschreibung

Die Erfindung betrifft einen Fahrzeugachslenker nach dem Oberbegriff des Patentanspruchs 1, und einen darin verwendbaren Verschlussstopfen nach Patentanspruch 9.

Aus der DE 10 2006 015 671 A1 und der DE 10 2008 061 190 A1 sind in Gussbauweise hergestellte Fahrzeugachslenker mit einem Achsbefestigungsbereich für die Achse des Fahrzeuges und mit einer in Fahrzeugrichtung vorne angeordneten Queröffnung bekannt. In der Queröffnung sitzt üblicherweise eine verformbare Elastomerbuchse, welche Bestandteil des den Achslenker gegenüber dem Fahrzeug abstützenden Schwenklagers ist. Zur Reduzierung seines Gewichtes ist der Achslenker im Wesentlichen als Hohlkörper mit einem Hohlraum und mehreren Öffnungen gestaltet, von denen eine Öffnung in die Queröffnung mündet. Infolge dieser Öffnung ist die Mantelfläche der Queröffnung unvollständig. Wenn nach der Montage des Achslenkers die Elastomerbuchse des Schwenklagers in der Queröffnung sitzt, ist die Elastomerbuchse nicht vollständig durch eine zylindrische Mantelfläche umschlossen mit der Folge, dass die Buchse je nach Belastungszustand und - richtung nicht das ihr zugedachte Verformungsverhalten zeigt.

Würde andererseits ein Einmünden des Hohlraums in die Queröffnung gießtechnisch unterbunden, wäre dies von Nachteil in Bezug auf die Gießbarkeit des Achslenkers, da dann beim Gießen mindestens zwei getrennte Gießkerne erforderlich wären.

Ziel der Erfindung ist es daher, bei einem Fahrzeugachslenker, der als ein gegossener Hohlkörper gestaltet ist, zu einer Einbausituation für die in den Achslenker einsetzbare Elastomerbuchse zu kommen, bei der die Elastomerbuchse keine Einschränkungen des ihr zugedachten Verformungsverhaltens zeigt.

Zur **Lösung** wird ein Fahrzeugachslenker mit den Merkmalen des Anspruchs 1 vorgeschlagen.

Bei diesem Achslenker weist der Hohlraum, ausgehend von der Queröffnung, zunächst einen sich verengenden Längsabschnitt auf, an den sich eine Erweiterung anschließt. Mit dem sich verengenden Längsabschnitt wird durch gießtechnische Maßnahmen eine Abstützung für einen im Rahmen der Achsmontage in den Achslenker einsetzbaren Verschlussstopfen geschaffen. Dieser ist der Queröffnung zugewandt so gestaltet, dass er die Form der Mantelfläche der Queröffnung übernimmt bzw. in Umfangsrichtung vervollständigt. Bei eingesetztem Verschlussstopfen ergibt sich daher eine über den Umfang und die Tiefe der Queröffnung vollständige Wandung. Nach dem anschließenden Einsetzen der Elastomerbuchse ist diese keinen örtlich unterschiedlichen Flächenpressungen mit negativen Folgen für ihr Verformungsverhalten ausgesetzt.

Die an den sich verengenden Längsabschnitt des Hohlraums unmittelbar anschließende Erweiterung kann dazu dienen, den eingesetzten Verschlussstopfen zu sichern. Dieser kann rückseitig mit vorzugsweise federnd ausgebildeten Halteelementen versehen sein, die in die Erweiterung eingreifen. Zu diesem Zweck wird in Bezug auf die Gestaltung der Erweiterung vorgeschlagen, dass diese eine allseitige Erweiterung ist, und dass die Erweiterung vorzugsweise ein Hinterschnitt in der Hohlraumkontur ist.

Mit einer weiteren Ausgestaltung wird vorgeschlagen, dass der Hohlraum auf dem sich verengenden Längsabschnitt die Gestalt bzw. Innenkontur eines Vierkant-Prismenstumpfes hat, und dass dazu korrespondierend auch der Verschlussstopfen eine sich verjüngende Kontur aufweist, die der eines Vierkant-Prismenstumpfes entspricht.

Mit einer weiteren Ausgestaltung wird vorgeschlagen, dass die nach der Achsmontage die Elastomerbuchse aufnehmende Queröffnung einen Querschnitt aufweist, dessen Weite von beiden Seiten zur Längsmitte der Queröffnung hin zunimmt. Ein erster Vorteil dieser Ausgestaltung ist, bei der Herstellung des für den Guss des Achslenkers erforderlichen Sandkerns, dessen erleichterte Entformbarkeit aus seinem Formwerkzeug. Ein zweiter Vorteil ist die verbesserte Lagesicherung der Elastomerbuchse in Längsrichtung der Queröffnung. Hierzu kann zusätzlich beitragen, wenn auch die Elastomerbuchse an ihrem Umfang so gestaltet ist, dass die Weite ihrer Mantelfläche zur Längsmitte der Elastomerbuchse hin größer wird.

Zum Entfernen des Gießkerns nach dem Gießen trägt ferner bei, wenn die beiden Seitenwände des Achslenkers mit in den Hohlraum führenden Öffnungen versehen sind, und die Öffnungen auf einem mittleren Längsabschnitt des Hohlraums angeordnet sind.

Zur **Lösung** der genannten Aufgabenstellung wird ferner ein Verschlussstopfen zum Einsetzen in den Achslenker mit den in dem nebengeordneten Anspruch 9 angegebenen Merkmalen vorgeschlagen. Dieser Verschlussstopfen weist eine sich in Einsetzrichtung verjüngende Kontur auf, und er weist entgegengesetzt der Einsetzrichtung eine konkav gewölbte Außenfläche von im Wesentlichen rinnenförmiger Gestalt auf.

Gemäß einer Ausgestaltung des Verschlussstopfens ist dieser an seinem in Einsetzrichtung weisenden Ende mit Halteelementen versehen, an denen nach außen über die sich verjüngende Kontur hervorstehende Verriegelungsstrukturen ausgebildet sind. Die Verriegelungsstrukturen sind vorzugsweise so gestaltet, dass sie hinter die z. B. als Hinterschnitt gestaltete Erweiterung des Hohlraums im Achslenker eingreifen.

Vorzugsweise sind die am Verschlussstopfen angeordneten Halteelemente einstückig angeformte, federnde Zungen. Außerdem können, zum besseren Einsetzen des Verschlussstopfens in den Hohlraum des Achslenkers, an den Enden der Halteelemente Einführschrägen ausgebildet sein, wodurch die Halteelemente beim Einsetzen des Stopfens zunächst nach innen zurückweichen, und dann hinter der an dem Hohlraum ausgebildeten Erweiterung aufspringen.

Vorzugsweise besteht der Verschlussstopfen aus Kunststoff. Um ihn im Kunststoff-Spritzguss materialsparend herstellen zu können, kann die sich verjüngende Kontur des Stopfens durch die Außenränder von Rippen gebildet sein, die sich in Längsrichtung des Stopfens erstrecken.

Anhand der Zeichnungen werden im Folgenden weitere Einzelheiten und Vorteile des Fahrzeugachslenkers sowie des darin eingesetzten Verschlussstopfens erläutert. Auf den Zeichnungen zeigen:
- Fig. 1: einen Längsschnitt durch einen Fahrzeugachslenker mit eingesetztem Verschlussstopfen;
- Fig. 2: in einer perspektivischen Ansicht nur den Fahrzeugachslenker ohne Verschlussstopfen und ohne Elastomerbuchse;
- Fig. 3: einen Längsschnitt durch den Fahrzeugachslenker nach Fig. 2;
- Fig. 4: einen Längsschnitt durch den beim Gießen des Fahrzeugachslenkers verwendeten Gießkern;
- Fig. 5: den Verschlussstopfen in perspektivischer Darstellung;
- Fig. 6: den Verschlussstopfen in einer anderen perspektivischen Darstellung;
- Fig. 7: die Elastomerbuchse in einer perspektivischen Darstellung;
- Fig. 8: einen Schnitt durch die Elastomerbuchse längs deren Achse und
- Fig. 9: einen Schnitt durch die die Elastomerbuchse aufnehmende Queröffnung des Achslenkers entsprechend der in Fig. 1 eingezeichneten Schnittebene IX-IX.

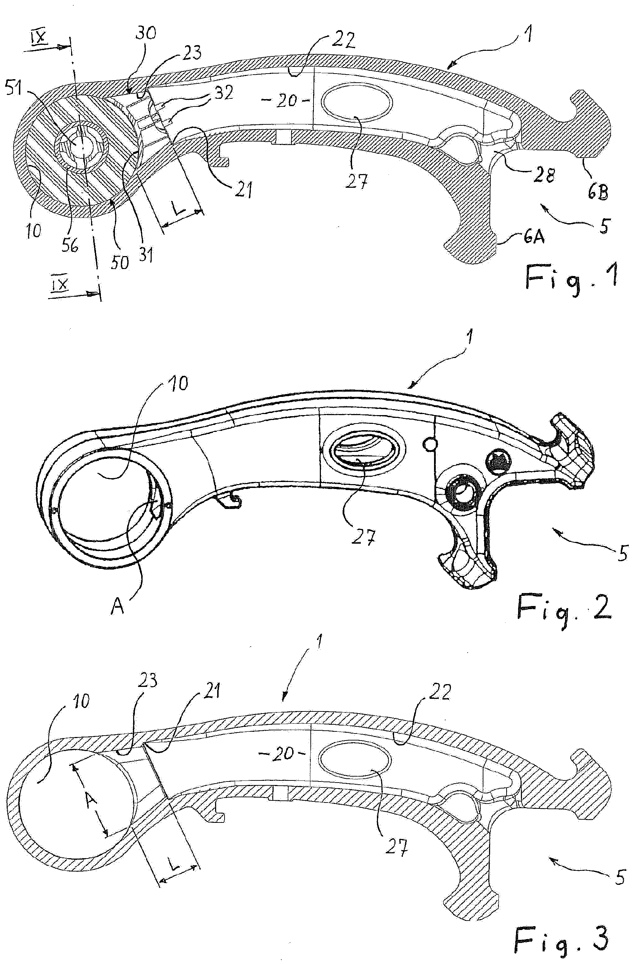

Der in Fig. 1 im Schnitt wiedergegebene Achslenker 1 ist Bestandteil des Fahrwerks eines Schwerlast-Anhängerfahrzeuges wie z. B. eines Lkw-Anhängers oder -Aufliegers. Bestandteil des Chassis solcher Anhängerfahrzeuge sind starre Stützen, an denen der jeweilige Achslenker 1 im Bereich seines in Fahrtrichtung vorderen Endes angelenkt ist. Diese Anlenkung des Achslenkers 1 ist üblicherweise als Schwenklager gestaltet. In die dort angeordnete, das Schwenkauge des Achslenkers 1 bildende Queröffnung 10 ist eine Elastomerbuchse 50 eingesetzt, durch deren im Wesentlichen zentral angeordnete Bohrung 51 ein in den Figuren nicht wiedergegebener Bolzen hindurchgesetzt ist. Die beiden Enden des Bolzens sitzen in korrespondierenden Bohrungen in der chassisfesten Stütze. Mit dem Bolzen werden die Seitenwände der chassisfesten Stütze gegen die Stirnflächen einer Stahlbuchse 56 gezogen, so dass diese dort reibschlüssig festsitzt. Der Bolzen bildet auf diese Weise das Zentrum des Schwenklagers, um das, abgestützt durch die Elastomerbuchse 50, der Achslenker 1 in Bezug auf das Fahrwerk des Anhängerfahrzeug schwenkbar ist.

Der Achslenker 1 ist außerdem, horizontal beabstandet zu der quer zur Fahrtrichtung ausgerichteten Queröffnung 10, mit einem Achsbefestigungsbereich 5 für die Fahrzeugachse versehen. Diese Fahrzeugachse ist bei Schwerlastfahrzeugen üblicherweise ein Achsrohr, welches in gleicher Weise mit dem in Fahrtrichtung links, wie mit dem in Fahrtrichtung rechts angeordneten Achslenker 1 verbunden ist. Da im vorliegenden Fall dieses Achsrohr einen im Wesentlichen quadratischen Querschnitt aufweist, besteht der Achsbefestigungsbereich 5 aus einem Winkel mit leistenförmigen Anlageflächen 6A, 6B, die sich von vorne her bzw. von oben her an dem quadratischen Achsrohr abstützen.

Gemäß Fig. 1 erstreckt sich der Achsbefestigungsbereich 5 nur über in etwa die Hälfte des Umfangs der Fahrzeugachse. Der Bereich wird komplettiert durch einen weiteren, korrespondierend gestalteten Rechteckwinkel, welcher Bestandteil eines zweiten Achslenkteils ist und sich mit entsprechenden leistenförmigen Anlageflächen von unten und von hinten her gegen die Fahrzeugachse abstützt. Die so korrespondierend gestalteten Achsbefestigungsbereiche 5 werden unter Verwendung zweier U-förmiger Bügel gegeneinander gezogen, wie dies z. B. in der WO 2010/066232 A1 beschrieben ist. Sofern der Achslenker im Rahmen einer luftgefederten Fahrzeugachse außerdem der unteren Abstützung einer Luftfeder dient, kann sich eine entsprechende Auflagefläche für die Luftfeder an diesem zweiten, hinteren Achslenkerteil befinden, wie dies ebenfalls in der WO 2010/066232 A1 im Einzelnen beschrieben ist.

Der Achslenker 1 besteht aus Guss und insbesondere Sphäroguss. Für größtmögliche Stabilität ist er als ein Hohlkörper mit einem über den größten Teil der Länge des Achslenkers reichenden Hohlraum 20 gestaltet. Der Hohlraum 20 steht über eine Öffnung A mit der sich quer zu dem Hohlraum und quer zur Fahrtrichtung erstreckenden Queröffnung 10 in Verbindung. Bei der Queröffnung 10 handelt es sich um eine Durchgangsöffnung von vorzugsweise kreisrundem Querschnitt, der allerdings über die Länge der Durchgangsöffnung nicht konstant ist.

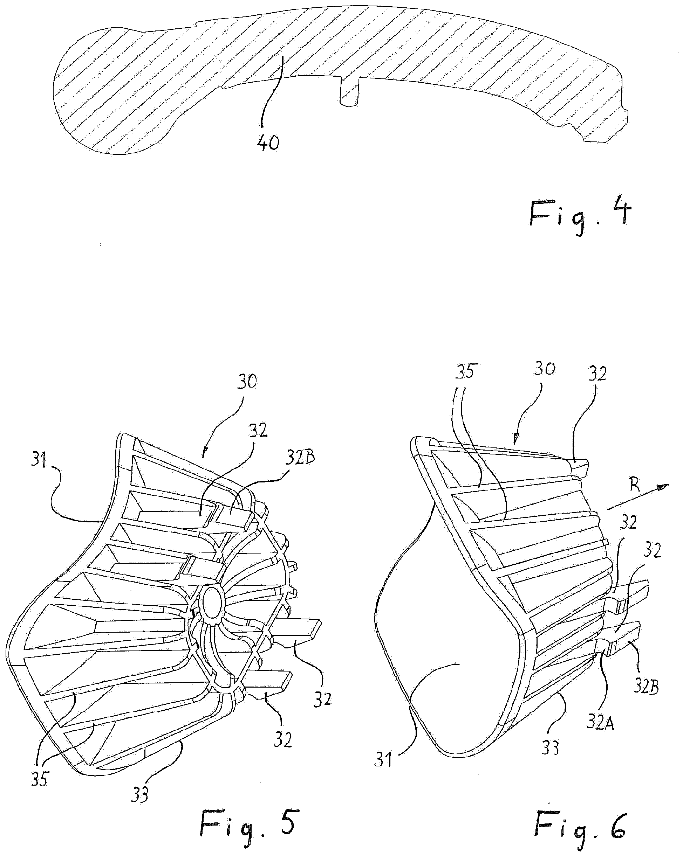

Der zur Herstellung des Achslenkers in eine umgebende Gießform eingesetzte, aus einem Gießsand geformte Gießkern 40 ist in der Figur 4 wiedergegeben.

In Fig. 3 sind Einzelheiten der Öffnung A wiedergegeben. Ausgehend von der Queröffnung 10 weist der Hohlraum 20 zunächst einen sich verengenden Längsabschnitt L auf, an den sich dann eine Erweiterung 21 in Gestalt eines allseitigen Hinterschnitts in der Hohlraumkontur anschließt. Ab dieser Erweiterung 21 verläuft dann die weitere Hohlraumkontur 22 im Wesentlichen ohne größere Vor- oder Rücksprünge.

Auf dem sich verengenden Längsabschnitt L hat die Wandung 23 des Hohlraums im Wesentlichen die Gestalt eines Vierkant-Prismenstumpfes, d. h. diese Wandung 23 verjüngt sich in beide Richtungen bis zum Erreichen der allseitigen Erweiterung 21.

Die Fig. 2 lässt aufgrund der perspektivischen Darstellung erkennen, dass die Öffnung A dazu führt, dass die Mantelfläche der Queröffnung 10 unvollständig ist. Würde in die Queröffnung die in den Figuren 1, 7, 8 und 9 wiedergegebene Elastomerbuchse 50 ohne anderweitige Maßnahmen eingesetzt, wäre die Elastomerbuchse 50 nicht vollständig durch eine Mantelfläche umschlossen mit der Folge, dass die Elastomerbuchse 50 je nach Belastungszustand und -Richtung nicht das ihr zugedachte Verformungsverhalten zeigen würde.

Daher ist gemäß Fig. 1 im betriebsfertigen Zustand des Fahrzeugachslenkers die Öffnung A durch einen Stopfen 30 verschlossen, der vorzugsweise als Kunststoff-Spritzteil gestaltet ist. Der Stopfen 30 wird, bei noch nicht montierter Elastomerbuchse 50, durch die Queröffnung 10 hindurch in den Hohlraum des Achslenkers in Fahrzeuglängsrichtung eingesetzt. Fig. 1 lässt erkennen, dass der Stopfen 30 eine sich in Einsetzrichtung R verjüngende Kontur 33 aufweist, die im Wesentlichen dieselbe Kontur eines Vierkant-Prismenstumpfes aufweist, die auch die Wandung 23 auf den Längsabschnitt L zeigt. Zur Queröffnung 10 hin und zum Verschließen der Öffnung A ist der Stopfen 30 so gestaltet, dass er die Form der Mantelfläche der Queröffnung 10 übernimmt bzw. in Umfangsrichtung vervollständigt. Hierzu ist der Verschlussstopfen 30 mit einer konkav gewölbten Außenfläche 31 von im Wesentlichen rinnenförmiger Gestalt versehen, die die Gestalt der Mantelfläche der Queröffnung übernimmt bzw. in Umfangsrichtung vervollständigt. Bei eingesetztem Verschlussstopfen 30 ergibt sich daher für die Queröffnung 10 eine über Umfang und Tiefe der Queröffnung vollständige Wandung. Insbesondere ist der Wölbungsradius der Außenfläche 31 in deren Mitte am größten, und nimmt von dort zu den Enden der Außenfläche 31 hin ab.

Die Figuren 5 und 6 zeigen ausschließlich den Stopfen bzw. Verschlussstopfen 30. Dessen sich in Einsetzrichtung R verjüngende Kontur 33 wird durch die Außenränder von Rippen 35 gebildet, die sich in Längsrichtung des Stopfens 30 erstrecken. Die sind von fertigungstechnischem Vorteil und sparen Material, wenn der Stopfen 30 einstückig als Kunststoff-Spritzteil hergestellt ist. Ebenfalls einstückig angeformt sind Halteelemente 32, an denen nach außen über die sich verjüngende Kontur 33 hervorstehende Verriegelungsstrukturen 32A ausgebildet sind. Ist der Stopfen 30 vollständig in den Längsabschnitt L des Hohlraums 20 eingesetzt, verriegeln die Verriegelungsstrukturen 32A hinter den Erweiterungen 21. In Einsetzrichtung R sind an den Halteelementen 32 jeweils Einführschrägen 32B ausgebildet, die das Ausweichen nach innen hin der als federnde Zungen gestalteten Halteelemente 32 beim Einsetzen des Stopfens 30 erleichtern.

Nachdem der Stopfen 30 eingesetzt und durch Eingriff der Halteelemente 32 in der Erweiterung 21 verriegelt ist, wird die Elastomerbuchse 50 in Richtung ihrer Längsachse soweit in die Queröffnung 10 eingepresst, dass sie in deren Längsmitte sitzt.

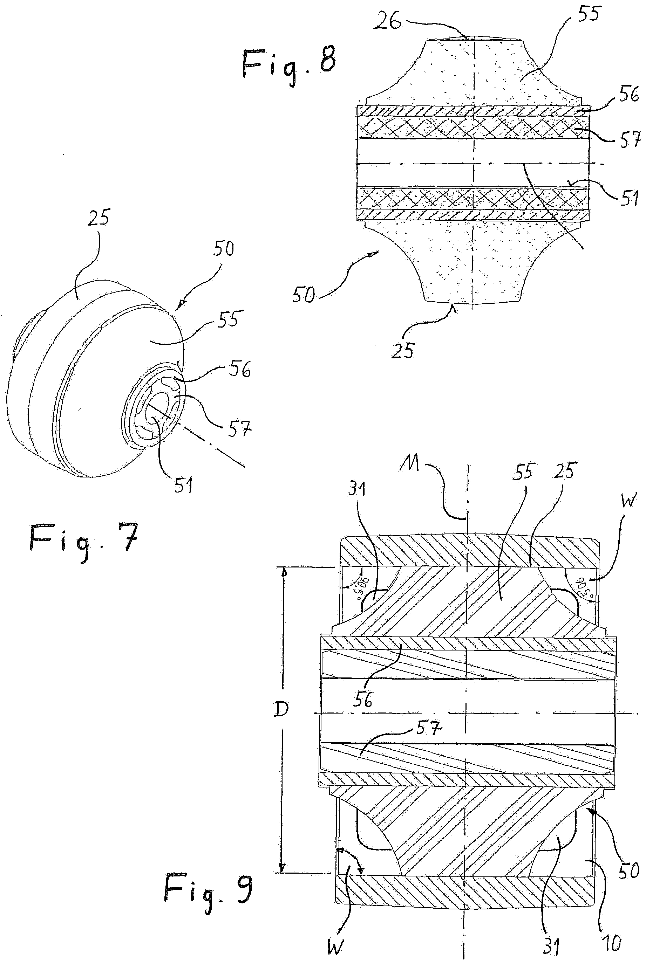

Wie in den Figuren 7 und 8 wiedergegeben, ist die Elastomerbuchse 50 eine Stahlgummibuchse. Sie besteht aus insgesamt drei Bestandteilen, nämlich, von radial außen nach radial innen, einem Gummiring 55, einer Stahlbuchse 56 und einem Distanzstück 57. Der Gummiring 55 besteht aus Kautschuk oder einem Elastomer mit zugleich Federungs- und Dämpfungsverhalten. Auf die Stahlbuchse 56 wird der Gummiring 55 aufvulkanisiert, weshalb er aus einem hierfür geeigneten Stahl besteht. Das buchsenförmige Distanzstück 57 ist für ein geringes spezifisches Gewicht aus Kunststoff und weist zentral eine Bohrung 51 auf, durch die mit wenig Spiel die bereits genannte Schraube bzw. der Bolzen hindurchführt.

Für eine günstiges Verformungsverhalten besteht der aus Kautschuk oder einem sich ähnlich verhaltenden Elastomer bestehende Gummiring 55 aus Vollmaterial. Er weist im Bereich der Verbindung mit der Stahlbuchse 56 einen Maximalwert an axialer Breite auf, wobei von dort ausgehend die axiale Breite zur Mantelfläche 25 des Gummirings 55 degressiv abnimmt, wie dies die Figuren 7 bis 9 erkennen lassen.

Im Hinblick auf die von der Stahlgummibuchse 50 vor allem beim Einfedern des Fahrzeugs aufgenommene Belastung ist der Gummiring 55 nicht symmetrisch in Bezug auf die den Bolzen aufnehmende Bohrung 51. Vielmehr ist der Gummiring 55 exzentrisch, indem sich oben ein geringerer Abstand zwischen der Stahlbuchse 56 und der Wandung der Queröffnung 10 ergibt, als unten. Eine Kerbe 26 oder eine vergleichbare Formstruktur in der Mantelfläche 25 des Gummirings 55 stellt in Verbindung mit einer zeichnerisch nicht dargestellten, korrespondierenden Struktur innen an der Queröffnung 10 des Achslenkers 1 die richtige Drehlage der Stahlgummibuchse 50 in der Queröffnung 10 sicher.

Die Mantelfläche 25 der Stahlgummibuchse 50 ist nicht zylindrisch gestaltet. Vielmehr weist die Mantelfläche 25 einen Durchmesser auf, der von beiden Rändern der Mantelfläche 25 zur Längsmitte M der Elastomerbuchse hin zunimmt, so dass sich für die Mantelfläche 25 eine dachförmige Kontur ergibt. Korrespondierend hierzu weist auch die Queröffnung 10 keinen über die Tiefe der Queröffnung 10 gleichbleibenden Querschnitt auf, vielmehr weist die Queröffnung 10 einen Querschnitt auf, dessen Weite D von beiden Öffnungsrändern zur Längsmitte M der Queröffnung 10 hin zunimmt, so dass auch insoweit eine Dachform vorliegt. Ist daher die Elastomerbuchse 50 in die Queröffnung 10 des Achslenkers eingesetzt, kommt es in Längsrichtung der Queröffnung 10 zu einer gewissen Zentrierung, da mit jedem Längsversatz der Elastomerbuchse 50 deren radiale Stauchung und damit ein Verformungswiderstand verbunden wäre.

Gemäß Fig. 10 beträgt auf beiden Seiten der Längsmitte M der Winkel W der inneren Mantelfläche der Queröffnung 90,5° statt der sonst üblichen 90°. Daher ist die Queröffnung 10 zu beiden Seiten ihrer Längsmitte M konisch verlaufend mit einem Konuswinkel von 1° gestaltet. Ein solcher Winkel ist auch gießtechnisch bei der Herstellung des Gießkerns 40 vorteilhaft.

### Bezugszeichenliste

- 1: Achslenker
- 5: Achsbefestigungsbereich
- 6A: Anlagefläche
- 6B: Anlagefläche
- 10: Queröffnung
- 20: Hohlraum
- 21: Erweiterung
- 22: Hohlraumkontur
- 23: Wandung
- 25: Mantelfläche
- 26: Kerbe
- 27: Öffnung
- 28: Öffnung
- 30: Stopfen
- 31: Außenfläche
- 32: Halteelement
- 32A: Verriegelungsstruktur
- 32B: Einführschräge
- 33: Kontur des Stopfens
- 35: Rippe
- 40: Gießkern
- 50: Elastomerbuchse, Stahlgummibuchse
- 51: Bohrung
- 55: Gummiring
- 56: Stahlbuchse
- 57: Distanzstück

- A: Öffnung
- D: Weite
- L: Längsabschnitt
- M: Längsmitte R Einsetzrichtung
- W: Winkel

## Patentansprüche

1. Fahrzeugachslenker aus einem mindestens einen Hohlraum (20) aufweisenden Gussteil, an dem ein Achsbefestigungsbereich (5) für eine Fahrzeugachse und eine mit dem Hohlraum (20) in Verbindung stehende Queröffnung (10) zur Aufnahme eines den Achslenker gegenüber dem Fahrzeug abstützenden Schwenklagers angegossen sind, **dadurch gekennzeichnet, dass** zur Abstützung eines in den Achslenker einsetzbaren Verschlussstopfens der Hohlraum (20), ausgehend von der Queröffnung (10), zunächst einen sich verengenden Längsabschnitt (L) aufweist, und dass sich an den sich verengenden Längsabschnitt (L) eine der Sicherung des eingesetzten Verschlussstopfens dienende Erweiterung (21) anschließt.

2. Fahrzeugachslenker nach Anspruch 1, **dadurch gekennzeichnet, dass** die Erweiterung eine allseitige Erweiterung (21) ist.

3. Fahrzeugachslenker nach Anspruch 1 oder 2, **dadurch gekennzeichnet, dass** die Erweiterung (21) ein Hinterschnitt in der Hohlraumkontur ist.

4. Fahrzeugachslenker nach einem der Ansprüche 1 bis 3, **dadurch gekennzeichnet, dass** gegen die Wandung (23) des sich verengenden Längsabschnitts (L) ein Stopfen (30) abgestützt ist, der der Queröffnung (10) zugewandt so gestaltet ist, dass er die Form der Mantelfläche der Queröffnung (10) aufnimmt und vervollständigt.

5. Fahrzeugachslenker nach Anspruch 4, **dadurch gekennzeichnet, dass** der Stopfen (30) rückseitig mit vorzugsweise federnd ausgebildeten Halteelementen (32) versehen ist, die in die Erweiterung (21) eingreifen.

6. Fahrzeugachslenker nach einem der vorangehenden Ansprüche, **dadurch gekennzeichnet, dass** der Hohlraum (20) auf dem sich verengenden Längsabschnitt (L) die Gestalt eines Vierkant-Prismenstumpfes hat.

7. Fahrzeugachslenker nach einem der vorangehenden Ansprüche, **dadurch gekennzeichnet, dass** die Queröffnung (10) einen Querschnitt aufweist, dessen Weite (D) von beiden Seiten zur Längsmitte der Queröffnung (10) hin zunimmt.

8. Fahrzeugachslenker nach einem der vorangehenden Ansprüche, **dadurch gekennzeichnet, dass** dessen beiden Seitenwände mit in den Hohlraum (20) führenden Öffnungen (27) versehen sind, und dass die Öffnungen (27) auf einem mittleren Längsabschnitt des Hohlraums (20) angeordnet sind.

9. Verschlussstopfen zum Einsetzen in einen Fahrzeugachslenker nach einem der Ansprüche 1 bis 8, **dadurch gekennzeichnet, dass** der Verschlussstopfen eine sich in Einsetzrichtung (R) verjüngende Kontur (33), und entgegengesetzt der Einsetzrichtung eine konkav gewölbte Außenfläche (31) von im Wesentlichen rinnenförmiger Gestalt aufweist.

10. Verschlussstopfen nach Anspruch 9, **dadurch gekennzeichnet, dass** dieser an seinem in Einsetzrichtung (R) weisenden Ende mit Halteelementen (32) versehen ist, an denen nach außen über die sich verjüngende Kontur (33) hervorstehende Verriegelungsstrukturen (32A) ausgebildet sind.

11. Verschlussstopfen nach Anspruch 10, **dadurch gekennzeichnet, dass** die Halteelemente (32) als einstückig angeformte, federnde Zungen gestaltet sind.

12. Verschlussstopfen nach Anspruch 10 oder 11, **gekennzeichnet durch** an den Enden der Halteelemente (32) ausgebildete Einführschrägen (32B).

13. Verschlussstopfen nach einem der Ansprüche 9 - 12, **dadurch gekennzeichnet, dass** der Wölbungsradius der Außenfläche (31) in deren Mitte am größten ist und von dort zu den Enden der Außenfläche (31) hin abnimmt.

14. Verschlussstopfen nach einem der Ansprüche 9 - 13, **dadurch gekennzeichnet, dass** die sich verjüngende Kontur (33) durch die Außenränder von Rippen (35) gebildet wird, die sich in Längsrichtung des Verschlussstopfens erstrecken.

15. Verschlussstopfen nach einem der Ansprüche 9 - 14, **dadurch gekennzeichnet, dass** die sich verjüngende Kontur (33) der eines Vierkant-Prismenstumpfes entspricht.

## Claims

1. Vehicle axle guide consisting of a cast part which has at least one cavity (20) and on which are formed an axle mounting region (5) for a vehicle axle and a transverse opening (10) communicating with the cavity (20) in order to receive a pivot bearing which supports the axle guide relative to the vehicle, **characterised in that**, in order to support a closing plug which can be inserted into the axle guide, starting from the transverse opening (10) the cavity (20) initially has a narrowing longitudinal portion (L), and that a widened portion (21) serving to secure the inserted closure plug adjoins the narrowing longitudinal portion (L).

2. Vehicle axle guide according to claim 1, **characterised in that** the widened portion (21) widens on all sides.

3. Vehicle axle guide according to claim 1 or 2, **characterised in that** the widened portion (21) is an undercut in the contour of the cavity.

4. Vehicle axle guide according to one of claims 1 to 3, **characterised in that** a plug (30) which faces the transverse opening (10) and is configured so that it assumes and completes the shape of the surface of the transverse opening (10) is supported against the wall (23) of the narrowing longitudinal portion (L).

5. Vehicle axle guide according to claim 4, **characterised in that** the plug (30) is provided on the rear side with preferably resiliently formed retaining elements (32) which engage in the widened portion (21).

6. Vehicle axle guide according to one of the preceding claims, **characterised in that** the cavity (20) has the shape of a four-sided prism frustum on the narrowing longitudinal portion (L).

7. Vehicle axle guide according to one of the preceding claims, **characterised in that** the transverse opening (10) has a cross-section of which the width (D) increases from both sides towards the longitudinal centre of the transverse opening (10).

8. Vehicle axle guide according to one of the preceding claims, **characterised in that** the two side walls thereof are provided with openings (27) leading into the cavity (20), and that the openings (27) are arranged on a central longitudinal portion of the cavity (20).

9. Closing plug for insertion into a vehicle axle guide according to one of claims 1 to 8, **characterised in that** the closing plug has a contour (33) which tapers in the insertion direction (R), and opposite the insertion direction it has a concavely curved external surface (31) of substantially trough-shaped configuration.

10. Closing plug according to claim 9, **characterised in that** on its end pointing in the insertion direction (R) it is provided with retaining elements (32), on which are formed locking structures (32A) which project outwards over the tapered contour (33).

11. Closing plug according to claim 10, **characterised in that** the retaining elements (32) are configured as integrally formed, resilient tongues.

12. Closing plug according to claim 10 or 11, **characterised by** lead-in chamfers (32B) formed on the ends of the retaining elements (32).

13. Closing plug according to one of claims 9 to 12, **characterised in that** the radius of curvature of the external surface (31) is greatest in the centre and decreases from there to the ends of the external surface (31).

14. Closing plug according to one of claims 9 to 13, **characterised in that** the tapered contour (33) is formed by the outer edges of ribs (35) which extend in the longitudinal direction of the closing plug.

15. Closing plug according to one of claims 9 to 14, **characterised in that** the tapered contour (33) corresponds to that of a four-sided prism frustum.

## Revendications

1. Guide d'essieu de véhicule en pièce moulée qui présente au moins une cavité (20) et sur laquelle sont coulées une zone de fixation d'essieu (5) pour un essieu de véhicule et une ouverture transversale (10) en liaison avec la cavité (20) pour recevoir un palier de pivot soutenant le guide d'essieu par rapport au véhicule, **caractérisé en ce que**, pour le soutien d'un bouchon de fermeture pouvant être introduit dans le guide d'essieu, la cavité (20) présente, en partant de l'ouverture transversale (10), d'abord un tronçon longitudinal (L) qui va en se rétrécissant, et **en ce qu'**un élargissement (21) servant de blocage du bouchon de fermeture introduit se raccorde au tronçon longitudinal (L) qui va en se rétrécissant.

2. Guide d'essieu de véhicule selon la revendication 1, **caractérisé en ce que** l'élargissement est un élargissement (21) dirigé de tous côtés.

3. Guide d'essieu de véhicule selon la revendication 1 ou 2, **caractérisé en ce que** l'élargissement (21) est une contre-dépouille dans le contour de la cavité.

4. Guide d'essieu de véhicule selon l'une des revendications 1 à 3, **caractérisé en ce qu'**un bouchon (30) est soutenu contre la paroi (23) du tronçon longitudinal (L) qui va en se rétrécissant et est constitué en étant tourné vers l'ouverture transversale (10) de telle sorte qu'il reçoit et complète la forme de la surface d'enveloppe de l'ouverture transversale (10).

5. Guide d'essieu de véhicule selon la revendication 4, **caractérisé en ce que** le bouchon (30) est, côté arrière, muni d'éléments de retenue (32) de préférence constitués de façon élastique qui engrènent dans l'élargissement (21).

6. Guide d'essieu de véhicule selon l'une des revendications précédentes, **caractérisé en ce que**, sur le tronçon longitudinal (L) qui va en se rétrécissant, la cavité (20) a la forme d'un prisme tronqué carré.

7. Guide d'essieu de véhicule selon l'une des revendications précédentes, **caractérisé en ce que** l'ouverture transversale (10) présente une section transversale dont la largeur (D) augmente à partir des deux côtés vers le milieu longitudinal de l'ouverture transversale (10).

8. Guide d'essieu de véhicule selon l'une des revendications précédentes, **caractérisé en ce que** ses deux parois latérales sont munies d'ouvertures (27) conduisant dans la cavité (20), et **en ce que** les ouvertures (27) sont disposées sur un tronçon longitudinal médian de la cavité (20).

9. Bouchon de fermeture pour l'introduction dans un guide d'essieu de véhicule selon l'une des revendications 1 à 8, **caractérisé en ce que** le bouchon de fermeture présente un contour (33) qui va en se rétrécissant dans la direction d'introduction (R) et, à l'opposé de la direction d'introduction, une surface extérieure (31) bombée de façon concave ayant essentiellement une forme de rigole.

10. Bouchon de fermeture selon la revendication 9, **caractérisé en ce que** celui-ci est muni, à son extrémité tournée dans la direction d'introduction (R), d'éléments de retenue (32) sur lesquels sont constitués des structures de verrouillage (32A) faisant saillie vers l'extérieur au-delà du contour (33) qui va en se rétrécissant.

11. Bouchon de fermeture selon la revendication 10, **caractérisé en ce que** les éléments de retenue (32) sont constitués en tant que languettes élastiques formées d'une seule pièce.

12. Bouchon de fermeture selon la revendication 10 ou 11, **caractérisé par** des pentes d'introduction (32B) constituées aux extrémités des éléments de retenue (32).

13. Bouchon de fermeture selon l'une des revendications 9 à 12, **caractérisé en ce que** le rayon de bombement de la surface extérieure (31) est le plus grand au niveau de son milieu et diminue à partir de là vers les extrémités de la surface extérieure (31).

14. Bouchon de fermeture selon l'une des revendications 9 à 13, **caractérisé en ce que** le contour (33) qui va en se rétrécissant est formé par les bords extérieurs de nervures (35) qui s'étendent dans la direction longitudinale du bouchon de fermeture.

15. Bouchon de fermeture selon l'une des revendications 9 à 14, **caractérisé en ce que** le contour (33) qui va en se rétrécissant correspond au contour d'un prisme tronqué carré.
